# EUROPÄISCHE PATENTSCHRIFT

(11) **EP 2 706 304 B1**
(45) Veröffentlichungstag und Bekanntmachung des Hinweises auf die Patenterteilung: **09.11.2016**
(21) Anmeldenummer: 12183947.6
(22) Anmeldetag: 11.09.2012
(51) Int. Cl.: F24F 5/00, F28D 5/02

(54) **Verfahren und Vorrichtung zum Regeln eines Volumenstromes einer Befeuchtungsflüssigkeit beim adiabaten Kühlen**
Method and device for regulating a volume flow of a wetting fluid during adiabatic cooling
Procédé et dispositif de réglage d'un débit volumétrique d'un liquide d'humidification lors d'un refroidissement adiabatique

(43) Veröffentlichungstag der Anmeldung: 12.03.2014
(73) Patentinhaber: Hoval Aktiengesellschaft, 9490 Vaduz (LI)
(72) Erfinder: Büchel, Roland, 9497 Triesenberg (LI); Mecklenburg, Jochen, 9477 Trübbach (CH)
(74) Vertreter: Zenz Patentanwälte Partnerschaft mbB

(56) Entgegenhaltungen:
- US-A- 5 695 117
- US-A1- 2002 145 209
- US-A1- 2005 166 615
- US-A1- 2008 173 032
- US-A1- 2010 242 511

## Beschreibung

Die Erfindung richtet sich auf ein Verfahren zum Regeln eines Volumenstromes einer Befeuchtungsflüssigkeit beim adiabaten Kühlen, wobei eine Verdunstungsoberfläche mit der entlang der Verdunstungsoberfläche fließenden Befeuchtungsflüssigkeit befeuchtet wird und die zu kühlende und/oder zu befeuchtende Luft im Wesentlichen quer zur Fließrichtung der Befeuchtungsflüssigkeit über die Verdunstungsoberfläche geführt wird.

Die Erfindung betrifft auch eine Vorrichtung zum Regeln eines Volumenstromes einer Befeuchtungsflüssigkeit beim adiabaten Kühlen, die eine Verdunstungsoberfläche aufweist, die mit der von einer Befeuchtungseinrichtung bereitgestellten Befeuchtungsflüssigkeit befeuchtbar ist und die beim adiabaten Kühlen und/oder Befeuchten mit der zu kühlenden und/oder zu befeuchtenden Luft Wärme austauschen kann, wobei der Volumenstrom der beim Kühlen und/oder Befeuchten entlang der Verdunstungsoberfläche fließenden Befeuchtungsflüssigkeit regulierbar ist und wobei die zu kühlende und/oder zu befeuchtende Luft im Wesentlichen quer zur Fließrichtung der Befeuchtungsflüssigkeit und über die Verdunstungsoberfläche strömt, und wobei zur Regulierung des Volumenstromes der Befeuchtungsflüssigkeit wenigstens zwei Temperaturfühler vorgesehen sind.

Ein Verfahren und eine Vorrichtung der Eingangs bezeichneten Art sind zum Beispiel aus der US 2008/0173032 A1 bekannt.

Die Erfindung liegt auf dem Gebiet der sogenannten adiabaten Kühlung, die auch Verdunstungskühlung genannt wird. Bei der adiabaten Kühlung wird Befeuchtungsflüssigkeit, wie zum Beispiel Wasser, verdunstet, um die Kühlleistung zu erhöhen. Dabei nutzt der Kühlprozess das physikalische Prinzip der Energieaufnahme eines Mediums, wenn es vom flüssigen in den gasförmigen Aggregatzustand überwechselt. Nach diesem Prinzip wird beim Verdunsten von Befeuchtungsflüssigkeit Wärme benötigt, so dass durch Befeuchtung von Luft diese abgekühlt werden kann. Eine Vorrichtung der eingangs bezeichneten Art ist aus dem Stand der Technik beispielsweise als Kontaktbefeuchter oder Rieselbefeuchter bekannt. Für einen solchen Kontaktbefeuchter ist auch das eingangs beschriebene Verfahren bekannt, bei dem Befeuchtungsflüssigkeit in Form von Wasser auf einer porösen Oberfläche verrieselt wird, an der die zu kühlende und/oder zu befeuchtende Luft vorbei strömt, abkühlt und/oder Feuchtigkeit aufnimmt.

In der technischen Anwendung haben sich zwei Varianten etabliert, die sogenannte direkte und indirekte adiabate Kühlung, auch als Verdunstungskühlung bezeichnet. Bei der direkten Verdunstungskühlung wird der Kühlprozess durch direkte Befeuchtung der Außenluft und damit auch der durch zum Beispiel eine Lüftungsanlage gelieferten Zuluft umgesetzt. Die indirekte Variante realisiert demgegenüber die Befeuchtung auf der Abluftseite. Über einen Wärmetauscher wird die erzeugte Kälte von der Abluft auf die Zuluft übertragen. Dieses Konzept hat den entscheidenden Vorteil, dass die Luftfeuchte der Zuluft nicht geändert wird, das heißt es kommt zu keinem Anstieg der relativen Luftfeuchte, wie bei dem direkten Verfahren.

Bei direkter und indirekter adiabater Kühlung wird Luft adiabat, d.h. wärmedicht bzw. ohne Zu- oder Abfuhr von thermischer Energie, befeuchtet. Das dazu benötigte Wasser, auch als Befeuchtungsflüssigkeit bezeichnet, wird bei der Betrachtung der Effizienz des Kühlsystems berücksichtigt. Im Hinblick auf eine hohe Effizienz des Kühlsystems ist es erforderlich, den Verdunstungswasserverbrauch oder die zur Förderung und Umwälzung des Wassers notwendige Pumpenleistung gering zu halten. Die bekannten Systeme zur Kühlung von Luft, wie beispielsweise Kontaktbefeuchter oder Luftwäscher, weisen den Nachteil auf, dass das dem Prozess zugeführte Wasser schlecht bis gar nicht regulierbar ist, sondern lediglich der Wasserzulauf mit Hilfe einer Ventilsteuerung für einen festen Volumenstrom angestellt oder vollständig abgestellt werden kann.

Es ist daher wünschenswert, innerhalb eines adiabaten Kühl- und Befeuchtungsprozesses den Verdunstungswasserverbrauch oder die Pumpenleistung des Umlaufwasserstroms gering zu halten, um eine hohe Effizienz des Kühl- und Befeuchtungssystems zu erhalten, wobei im Sinne der Erfindung unter einem adiabaten Kühlprozess ein Kühlverfahren zu verstehen ist, bei dem Wasser bzw. Befeuchtungsflüssigkeit verdunstet.

Der Erfindung liegt die Aufgabe zugrunde, die Effizienz der Regelung eines Volumenstromes einer Befeuchtungsflüssigkeit beim adiabten Kühlen mit einfachen Mitteln zu steigern. Insbesondere stellt sich die vorliegende Erfindung die Aufgabe, ein Verfahren sowie eine entsprechende Vorrichtung zur Regelung eines Volumenstromes einer Befeuchtungsflüssigkeit beim adiabaten Kühlung vorzuschlagen, durch die mit Hilfe geeigneter Maßnahmen erhebliche Verbesserungen erzielt werden können.

Bei einem Verfahren der Eingangs bezeichneten Art wird diese Aufgabe erfindungsgemäß dadurch gelöst, dass nach einer vorbestimmten Zeitdauer des Befeuchtens der Verdunstungsoberfläche der Volumenstrom der über die Verdunstungsoberfläche fließenden Befeuchtungsflüssigkeit reduziert wird und nach dem Reduzieren des Volumenstroms Temperaturen und/oder zeitliche Temperaturgradienten der an der Verdunstungsoberfläche vorbeigeführten Luft an wenigstens zwei unterschiedlichen Positionen in Fließrichtung der Befeuchtungsflüssigkeit im Wesentlichen parallel zur Verdunstungsoberfläche ermittelt werden, wobei der Volumenstrom der Befeuchtungsflüssigkeit in Abhängigkeit der ermittelten Temperaturen und/oder zeitlichen Temperaturgradienten geregelt wird.

Ebenso wird obige Aufgabe von einer Vorrichtung der Eingangs bezeichneten Art dadurch gelöst, dass die wenigstens zwei Temperaturfühler in Fließrichtung der Befeuchtungsflüssigkeit und mit Bezug auf die Strömungsrichtung der zu kühlenden Luft stromab der Verdunstungsoberfläche angeordnet sind und Temperaturen an zwei unterschiedlichen Positionen in Fließrichtung der Befeuchtungsflüssigkeit parallel zur Verdunstungsoberfläche ermitteln.

Vorteilhafte und zweckmäßige Ausgestaltungen und Weiterbildungen der Erfindung ergeben sich aus den entsprechenden Unteransprüchen.

Durch die Erfindung wird eine Vorrichtung zum Regeln eines Volumenstromes einer Befeuchtungsflüssigkeit beim adiabaten Kühlen zur Verfügung gestellt, welche sich durch eine funktionsgerechte und einfache Konstruktion auszeichnet, und die darüber hinaus eine Regulierung des tatsächlich benötigten Volumenstromes der Befeuchtungsflüssigkeit ermöglicht. Gemäß dem erfindungsgemäßen Verfahren zum Regeln eines Volumenstromes einer Befeuchtungsflüssigkeit beim adiabten Kühlen erfolgt die Regulierung bzw. Regelung des Volumenstromes der Befeuchtungsflüssigkeit in Abhängigkeit von ermittelten Temperaturen, die zu einem bestimmten Messzeitpunkt ermittelt und verglichen werden, oder von ermittelten zeitlichen Temperaturgradienten, die für ein vorbestimmtes zeitliches Intervall ermittelt und bestimmt werden. Dabei werden Temperaturen oder Temperaturgradienten der abzukühlenden Luft bzw. der Luft, die an dem Wärmeaustausch bereits teilgenommen hat bzw. die bereits abgekühlt und/oder befeuchtet ist, an zumindest zwei Positionen in Fließrichtung der Befeuchtungsflüssigkeit und mit Bezug auf die Strömungsrichtung der abzukühlenden Luft stromab der Verdunstungsoberfläche gemessen bzw. bestimmt, so dass eine Art Temperaturprofil der abgekühlten und/oder befeuchteten Luft vorliegt, an dem zu erkennen ist, ob die Verdunstungsoberfläche ausreichend mit Befeuchtungsflüssigkeit benetzt ist, wodurch die gewünschte Abkühlung bzw. Befeuchtung sichergestellt ist, oder ob die Verdunstungsoberfläche aufgrund der Verdunstung der Befeuchtungsflüssigkeit ausgetrocknet ist. Mit anderen Worten lässt sich anhand der ermittelten Temperaturen bzw. Temperaturgradienten und des sich daraus ergebenden Profils in Fließrichtung der Befeuchtungsflüssigkeit ermitteln, ob die Verdunstung der Befeuchtungsflüssigkeit in ausreichendem Maße und gleichmäßig erfolgt, oder ob die Verdunstungsoberfläche ungleichmäßig mit Befeuchtungsflüssigkeit benetzt ist und zum Teil sogar schon ausgetrocknet ist. Durch die Erfindung ist damit eine indirekte messtechnische Erfassung der Austrocknung bzw. Verdunstung möglich, wodurch man die Regelgröße im Hinblick auf die Zuführung von Befeuchtungsflüssigkeit erhält. Wenn beispielsweise die Zufuhr der Befeuchtungsflüssigkeit abgeschaltet ist oder der Volumenstrom der zugeführten Befeuchtungsflüssigkeit reduziert ist, ist in Folge einer Austrocknung ein Temperaturanstieg an dem Temperaturfühler zu verzeichnen, der dem Zulauf der Befeuchtungsflüssigkeit am nächsten liegend angeordnet ist.

In Ausgestaltung des Verfahrens sieht die Erfindung vor, dass zur Regelung des der Verdunstungsoberfläche zugeführten Volumenstromes der Befeuchtungsflüssigkeit wenigstens zwei, für einen Messzeitpunkt an unterschiedlichen Positionen ermittelte Temperaturen oder wenigstens zwei an unterschiedlichen Positionen ermittelte zeitliche Temperaturgradienten der zu kühlenden bzw. bereits abgekühlten und/oder befeuchteten und an der Verdunstungsoberfläche vorbeigeführten Luft verglichen werden. Anhand des Vergleiches der ermittelten Temperaturen oder zeitlichen Temperaturgradienten, die in Fließrichtung der Befeuchtungsflüssigkeit bestimmt werden, kann auf einfache Weise ermittelt werden, ob eine Verdunstung vorliegt oder ob die Verdunstungsoberfläche ausreichend mit Befeuchtungsflüssigkeit benetzt ist.

Diesbezüglich sieht das erfindungsgemäße Verfahren in weiterer Ausgestaltung vor, dass der der Verdunstungsoberfläche zugeführte Volumenstrom der Befeuchtungsflüssigkeit bei Abweichung von wenigstens zwei, für einen Messzeitpunkt an unterschiedlichen Positionen ermittelten Temperaturen oder von wenigstens zwei an unterschiedlichen Positionen ermittelten zeitlichen Temperaturgradienten der gekühlten und/oder befeuchteten und an der Verdunstungsoberfläche vorbeigeführten Luft geregelt wird. Eine Änderung der Temperatur oder des zeitlichen Temperaturgradienten der an der Verdunstungsoberfläche vorbeigeführten Luft, d.h. der bereits gekühlten und/oder befeuchteten Luft, in Fließrichtung der Befeuchtungsflüssigkeit signalisiert demnach, dass der Volumenstrom der Befeuchtungsflüssigkeit zu regeln und zu verändern ist.

Gemäß dem erfindungsgemäßen Verfahren wird der der Verdunstungsoberfläche zugeführte Volumenstrom der Befeuchtungsflüssigkeit verringert, wenn die ermittelten Temperaturen oder die ermittelten zeitlichen Temperaturgradienten der zu kühlenden und/oder zu befeuchtenden und an der Verdunstungsoberfläche vorbeigeführten Luft an den wenigstens zwei unterschiedlichen Positionen in Fließrichtung der Befeuchtungsflüssigkeit und im Wesentlichen quer zur Strömungsrichtung der zu kühlenden und/oder befeuchtenden Luft im Wesentlichen identisch sind oder wenn die an wenigstens zwei unterschiedlichen Positionen ermittelten Temperaturen oder zeitlichen Temperaturgradienten der an der Verdunstungsoberfläche vorbeigeführten Luft einen Temperaturanstieg in Fließrichtung der Befeuchtungsflüssigkeit anzeigen. Die Temperaturerhöhung in Fließrichtung der Befeuchtungsflüssigkeit signalisiert, dass ausreichend Befeuchtungsflüssigkeit im adiabaten Prozess enthalten ist und dass von einer weiteren Zuführung von Befeuchtungsflüssigkeit abgesehen werden kann bzw. der Volumenstrom der zugeführten Befeuchtungsflüssigkeit entsprechend verringert werden kann, was auch bedeuten kann, dass gar keine Befeuchtungsflüssigkeit zugeführt wird.

Demgegenüber wird der der Verdunstungsoberfläche zugeführte Volumenstrom der Befeuchtungsflüssigkeit erhöht, wenn die an den wenigstens zwei unterschiedlichen Positionen ermittelten Temperaturen oder zeitlichen Temperaturgradienten der zu kühlenden und an der Verdunstungsoberfläche vorbeigeführten Luft einen Temperaturanstieg entgegen der Fließrichtung der Befeuchtungsflüssigkeit anzeigen. Diese Temperaturcharakteristik entlang der Fließrichtung der Befeuchtungsflüssigkeit weist darauf hin, dass eine Austrocknung der befeuchteten Verdunstungsoberfläche stattfindet und demnach Befeuchtungsflüssigkeit der Verdunstungsoberfläche zuzuführen ist bzw. der Volumenstrom der der Verdunstungsoberfläche zugeführten Befeuchtungsflüssigkeit zu erhöhen ist.

Um eine schleichende Temperaturerhöhung bei einem Vergleich der ermittelten Temperaturen bzw. Temperaturgradienten zu vermeiden, sieht die Erfindung in weiterer Ausgestaltung des erfindungsgemäßen Verfahrens vor, dass für eine vorbestimmte Zeitdauer die Befeuchtungsflüssigkeit mit maximalem oder im mit im Vergleich zum geregelten Volumenstrom erhöhten Volumenstrom der Verdunstungsoberfläche zugeführt wird. Diese Maßnahme ist auch dazu geeignet, Eintrocknungen von Mineralien und anderen Inhaltsstoffen der Befeuchtungsflüssigkeit, Verkalkungen und die Verkeimungsgefahr an der Verdunstungsoberfläche zu reduzieren, wenn der adiabate Kühlprozess und/oder der Befeuchtungsprozess abgeschaltet wird.

In Ausgestaltung des erfindungsgemäßen Verfahrens ist weiter vorgesehen, dass die zu kühlende Luft durch die Befeuchtungsflüssigkeit befeuchtet und direkt adiabat gekühlt wird. Das direkte Befeuchten der zu kühlenden Luft führt zu einem Anstieg der Luftfeuchtigkeit. Eingesetzt wird die Regelung des Volumenstromes der Befeuchtungsflüssigkeit im Zusammenspiel mit der direkten adiabaten Kühlung, wenn prozessbedingt eine hohe Feuchtigkeit gewünscht ist, wie zum Beispiel in der Textilindustrie oder in manchen Lackieranlagen.

Eine direkte adiabate Kühlung der Luft ist auf konstruktiv einfache Weise dadurch möglich, dass die Verdunstungsoberfläche eine mit Befeuchtungsflüssigkeit benetzbare Oberfläche eines Kontaktbefeuchters ist, an dem die zu kühlende Luft vorbeigeführt wird.

Alternativ kann die Verdunstungsoberfläche als Rohrregister eines Luft-Flüssigkeits-Wärmetauschers ausgebildet sein, bei dem zum adiabaten Kühlen und/oder Befeuchten ein Wärmeübertragungsmedium bzw. eine Wärmeübertragungsflüssigkeit durch das Rohrregister geführt wird und die zu befeuchtende Luft um das Rohrregister herum geleitet wird, wobei beim Kühlen die äußere Oberfläche des Rohrregisters mit Befeuchtungsflüssigkeit befeuchtet wird. Durch die Befeuchtung entsteht eine sogenannte Überfeuchtung im Register, durch die nochmals Energie zur Kühlung freigesetzt wird.

In alternativer Ausgestaltung sieht die Erfindung für das Verfahren vor, dass die zu kühlende Luft ohne Stoffaustausch mit der Befeuchtungsflüssigkeit indirekt adiabat gekühlt wird. Hierzu kann beispielsweise die Verdunstungsoberfläche als Teil eines Luft-Luft-Plattenwärmetauschers ausgebildet sein, bei dem Kühlluft vor ihrem Eintritt in den Luft-Luft-Plattenwärmetauscher mit der Befeuchtungsflüssigkeit befeuchtet wird. Dabei kann die Befeuchtung der Kühlluft beispielsweise mit Hilfe eines Kontaktbefeuchters nach dem Prinzip der direkten adiabaten Kühlung erfolgen, so dass auf einfache Weise sehr effizient unterschiedliche Konzepte der Kühlung, d.h. adiabate direkte und indirekte Kühlung, kombiniert werden können.

Zur Regelung einer beim Befeuchten stets vorhandenen überschüssigen Menge an Befeuchtungsflüssigkeit ist in Ausgestaltung des Verfahrens vorgesehen, dass die Temperaturen mit Hilfe von entsprechenden Temperaturfühlern ermittelt werden, wobei die Temperaturfühler für den Vergleich von ermittelten Temperaturen vor dem Befeuchten der Verdunstungsoberfläche und dem adiabaten Kühlen derart kalibriert werden, dass die Temperaturfühler vor dem Beginn des Befeuchtens eine gewünschte Temperaturdifferenz in Fließrichtung der Befeuchtungsflüssigkeit aufweisen. Diese voreingestellte Temperaturdifferenz ist dabei so gewählt, dass vor dem Befeuchten und vor dem adiabaten Kühlen ein scheinbarer Temperaturanstieg entgegen der Fließrichtung angezeigt wird, was eine Erhöhung des Volumenstroms der zugeführten Befeuchtungsflüssigkeit bedeutet.

Hinsichtlich der erfindungsgemäßen Vorrichtung kann in Ausgestaltung die Verdunstungsoberfläche eine mit der Befeuchtungsflüssigkeit benetzbare Oberfläche eines Kontaktbefeuchters sein und das Kühlen der zu kühlenden Luft direkt adiabat erfolgen.

Gemäß einer anderen Ausgestaltung der erfindungsgemäßen Vorrichtung ist die Verdunstungsoberfläche als Rohrregister eines Luft-Flüssigkeits-Wärmetauschers ausgebildet, bei dem ein Wärmeübertragungsmedium bzw. eine Wärmeübertragungsflüssigkeit durch das Rohrregister fließt und die zu kühlende Luft das Rohrregister umströmt, wobei der Luft-Flüssigkeits-Wärmetauscher die Befeuchtungseinrichtung aufweist, durch welche die äußere Oberfläche des Rohrregisters mit der Befeuchtungsflüssigkeit benetzbar ist. Dabei kann die Befeuchtungsreinrichtung als Wäscher, Kontaktbefeuchter, Hochdruckbefeuchter oder dergleichen ausgebildet sein.

Nach einer noch weiteren Ausgestaltung der erfindungsgemäßen Vorrichtung ist die Verdunstungsoberfläche als Teil eines LuftLuft-Plattenwärmetauschers ausgebildet, bei dem die zu kühlende Luft ihre Wärme mit einer vor ihrem Eintritt in den Luft-Luft-Plattenwärmetauscher mit der Befeuchtungsflüssigkeit befeuchteten Kühlluft indirekt adiabat austauscht. Die Befeuchtung der Kühlluft kann hierbei zum Beispiel mit Hilfe eines Kontaktbefeuchters erfolgen.

Schließlich sieht die Erfindung in weiterer Ausgestaltung der Vorrichtung vor, dass die wenigstens zwei Temperaturfühler außerhalb des Luft-Luft-Plattenwärmetauschers an dessen Austrittseite für die zu kühlende Luft angeordnet sind. Auf diese Weise folgt eine indirekte Temperaturmessung der Austrocknung, da die zu kühlende Luft bei dieser Verfahrensführung nicht befeuchtet wird.

Es versteht sich, dass die vorstehend genannten und nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen. Der Rahmen der Erfindung ist nur durch die Ansprüche definiert.

Weitere Einzelheiten, Merkmale und Vorteile des Gegenstandes der Erfindung ergeben sich aus der nachfolgenden Beschreibung im Zusammenhang mit der Zeichnung, in der beispielhaft bevorzugte Ausführungsbeispiele der Erfindung dargestellt sind. In der Zeichnung zeigt:
Figur 1 in schematischer Darstellung eine erfindungsgemäße Vorrichtung, die als Kontaktbefeuchter ausgebildet ist,
Figur 2 in exemplarischer Darstellung einen Anwendungsfall, bei welchem die ermittelten Temperaturen bzw. Temperaturgradienten der abzukühlenden Luft in Fließrichtung der Befeuchtungsflüssigkeit ansteigen,
Figur 3 in exemplarischer Darstellung einen weiteren Anwendungsfall, bei welchem die ermittelten Temperaturen bzw. Temperaturgradienten der abzukühlenden Luft entgegen der Fließrichtung der Befeuchtungsflüssigkeit ansteigen,
Figur 4 in schematischer Darstellung eine weitere erfindungsgemäße Vorrichtung, die als Luft-Flüssigkeits-Wärmetauscher ausgebildet ist, und
Figur 5 in schematischer Darstellung eine noch weitere erfindungsgemäße Vorrichtung, die als Luft-Luft-Wärmetauscher ausgebildet ist.

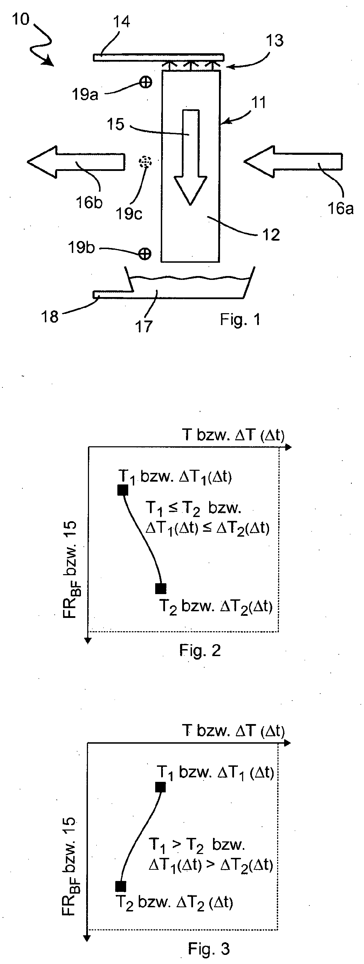

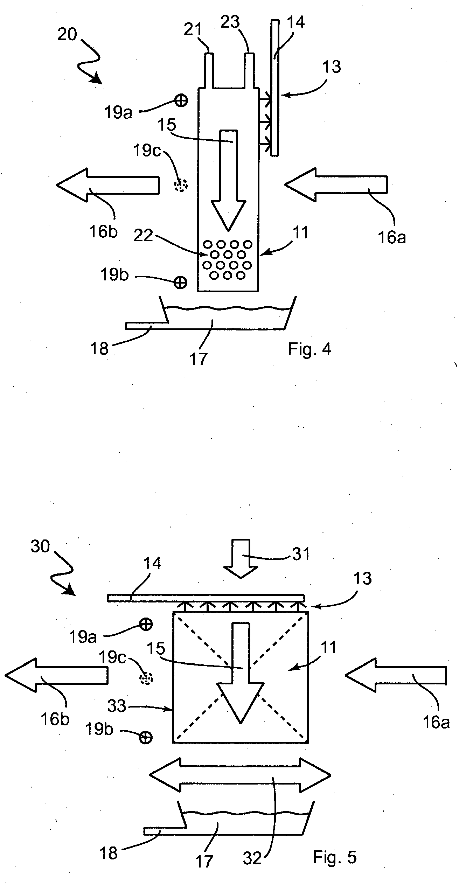

In den Figuren 1, 4 und 5 sind verschiedene erfindungsgemäße Vorrichtungen zum adiabten Kühlen von Luft dargestellt, wobei die Vorrichtung in Figur 1 als ein Kontaktbefeuchter 10, die Vorrichtung in Figur 4 als ein Luft-Flüssigkeits-Wärmetauscher 20 und die Vorrichtung in Figur 5 als Luft-Luft-Wärmetauscher 30 ausgebildet ist.

Die in Figur 1 als Kontaktbefeuchter 10 ausgebildete erfindungsgemäße Vorrichtung weist eine Verdunstungsoberfläche 11 auf, die als eine poröse Oberfläche 12 ausgeformt ist. Die Oberfläche 12 der Verdunstungsoberfläche 11 ist mit Befeuchtungsflüssigkeit benetzbar, wobei die Verdunstungsoberfläche 11 mit einer Befeuchtungseinrichtung 13 gekoppelt ist. Der Befeuchtungseinrichtung 13 wird Befeuchtungsflüssigkeit über einen Zulauf 14 zugeführt. Ferner stellt die Befeuchtungseinrichtung 13 der Verdunstungsoberfläche 11 Befeuchtungsflüssigkeit bereit, so dass diese benetzt werden kann. Der Pfeil 15 in Figur 1 zeigt die Fließrichtung der Befeuchtungsflüssigkeit an, die sich aufgrund des Einflusses der Schwerkraft ergibt, wobei die Verdunstungsoberfläche 11 zur Befeuchtung und zum Wärmeaustausch mit zu befeuchtender und zu kühlender Luft bestimmt ist. Die Strömungsrichtung der zu kühlenden und zu befeuchtenden Luft ist durch die Pfeile 16a und 16b in Figur 1 angedeutet. Dabei bezieht sich der Pfeil 16a auf die noch zu kühlende Luft, die sich mit Bezug auf die Strömungsrichtung der zu kühlenden Luft stromauf der Verdunstungsoberfläche 11 befindet, wohingegen sich der Pfeil 16b auf die bereits gekühlte Luft bezieht, die sich mit Bezug auf die Strömungsrichtung der zu kühlenden und zu befeuchtenden Luft stromab der Verdunstungsoberfläche 11 befindet. Der Pfeil 16b gibt also die Strömungsrichtung der gekühlten und/oder befeuchteten Luft an, die die Verdunstungsoberfläche 11 bereits passiert hat. Die zu kühlende und/oder zu befeuchtende Luft wird somit an der mit Befeuchtungsflüssigkeit benetzbaren Oberfläche 12 des Kontaktbefeuchters 10 vorbeigeführt bzw. strömt dort vorbei. Dementsprechend werden die Befeuchtungsflüssigkeit und die zu kühlende Luft im Wesentlichen im Kreuzstrom geführt, wobei beim adiabten Kühlen die Verdunstungsoberfläche 11 mit der zu kühlenden Luft Wärme austauscht, so dass für dieses Ausführungsbeispiel eine direkte adiabate Kühlung der zu kühlenden Luft vorliegt, wodurch sich die Luftfeuchtigkeit der zu kühlenden Luft beim Kühlen erhöht. Somit fließt die Befeuchtungsflüssigkeit beim adiabten Kühlen entlang der Verdunstungsoberfläche, wobei die zu kühlende Luft im Wesentlichen quer zur Fließrichtung (Pfeil 15 in Figur 1) der Befeuchtungsflüssigkeit über die Verdunstungsoberfläche 11 strömt. Überschüssige Befeuchtungsflüssigkeit bzw. Befeuchtungsflüssigkeit, die beim Wärmeaustausch mit der zu kühlenden Luft nicht verdunstet, wird aufgrund des Schwerkrafteinflusses von einem Sammler 17 unterhalb der Verdunstungsoberfläche 11 gesammelt und über einen Ablauf 18 mit Hilfe einer nicht dargestellten Pumpe im Kreislauf zu dem Zulauf 14 der Befeuchtungseinrichtung 13 zurück geführt, um die Verdunstungsoberfläche 11 weiter mit Befeuchtungsflüssigkeit zu versorgen und zu benetzen. Der Volumenstrom der Befeuchtungsflüssigkeit, welcher der Verdunstungsoberfläche 11 über die Befeuchtungseinrichtung 13 zugeführt wird, ist regulierbar, indem die Zufuhr von Befeuchtungsflüssigkeit zu- oder abgestellt wird. Eine an den Bedarf angepasste und ggf. kontinuierliche Zufuhr von Befeuchtungsflüssigkeit ist hingegen bislang nicht bekannt, wobei sich der Bedarf an dem Grad der Verdunstung der Befeuchtungsflüssigkeit orientieren sollte.

Um den Verbrauch der Befeuchtungsflüssigkeit und/oder die erforderliche Pumpenleistung zur Umwälzung bzw. zum Umlauf der Befeuchtungsflüssigkeit zu reduzieren, sieht die Erfindung vor, dass zur Regulierung des Volumenstromes der Befeuchtungsflüssigkeit wenigstens zwei Temperaturfühler 19a und 19b vorgesehen sind. In Figur 1 ist schematisch ein dritter Temperaturfühler 19c angedeutet, welcher entbehrlich ist und lediglich der Erhöhung der Empfindlichkeit der Detektion der Austrocknung bzw. Verdunstung dient. Die Temperaturfühler 19a, 19b und ggf. 19c sind in Fließrichtung der
Befeuchtungsflüssigkeit (Pfeil 15 in Figur 1) und mit Bezug auf die Strömungsrichtung der zu kühlenden Luft (Pfeil 16b in Figur 1) stromab der Verdunstungsoberfläche 11 im Luftstrom der abgekühlten und/oder befeuchteten Luft angeordnet.

Zur Reduzierung des Verbrauchs der Befeuchtungsflüssigkeit und der Pumpenleistung wird nachstehend das erfindungsgemäße Verfahren anhand der Figur 1 beschrieben, in der ein adiabater Prozess anhand des Kontaktbefeuchters 10 prinzipiell dargestellt ist. Wie vorstehend bereits ausgeführt, wird die Verdunstungsoberfläche 11 mit Befeuchtungsflüssigkeit befeuchtet. Die zu kühlende und/oder zu befeuchtende Luft strömt im Wesentlichen quer (siehe Pfeil 16a in Figur 1) zur Fließrichtung 15 der Befeuchtungsflüssigkeit in Richtung und über die Verdunstungsoberfläche 11. Nach einer vorbestimmten Zeit des Befeuchtens, in der im Hinblick auf die adiabte Kühlung erfahrungsgemäß die Oberfläche 12 der Verdunstungsoberfläche 11 hinreichend mit Befeuchtungsflüssigkeit benetzt ist, wird der Volumenstrom der über die Befeuchtungseinrichtung 13 der Verdunstungsoberfläche 11 zugeführten Befeuchtungsflüssigkeit reduziert, wobei die Reduzierung auch ein Abschalten der Zufuhr an Befeuchtungsflüssigkeit umfassen kann. Wenn der Volumenstrom der Befeuchtungsflüssigkeit reduziert ist, beginnt die Verdunstungsoberfläche 11 des Kontaktbefeuchters langsam auszutrocknen, wenn nicht ausreichend Befeuchtungsflüssigkeit zugeführt wird bzw. wenn die Reduzierung der zugeführten Befeuchtungsflüssigkeit zu hoch ausfällt. Mit der Austrocknung nimmt die Kühlleistung des Prozesses kontinuierlich ab, was sich in einer höheren Temperatur der abzukühlenden Luft stromab (siehe Pfeil 16b in Figur 1) der Verdunstungsoberfläche 11 auswirkt. Mit anderen Worten wird die abzukühlende und/oder zu befeuchtende Luft nicht mehr ausreichend abgekühlt und weist nach dem Passieren der Verdunstungsoberfläche 11 eine zu hohe Temperatur auf.

Die Austrocknung an der Verdunstungsoberfläche 11 beginnt im Bereich der Befeuchtungseinrichtung 13 und setzt sich in Fließrichtung 15 der Befeuchtungsflüssigkeit fort. Durch wenigstens zwei Temperaturfühler 19a und 19b lässt sich eine beginnende Austrocknung messtechnisch erfassen. Es können noch weitere in Fließrichtung der Befeuchtungsflüssigkeit angeordnete Temperaturfühler, wie zum Beispiel der dritte Temperaturfühler 19c, verwendet werden, um die Austrocknung genauer erfassen zu können. In dem in Figur 1 dargestellten Ausführungsbeispiel sind die Temperaturfühler 19a, 19b, 19c in Fließrichtung 15 der Befeuchtungsflüssigkeit, parallel zur Verdunstungsoberfläche 11 und mit Bezug auf die Strömungsrichtung der zu kühlenden Luft stromab (siehe Pfeil 16b in Figur 1) der Verdunstungsoberfläche 11 angeordnet. Abstrakter ausgedrückt werden nach dem Reduzieren des Volumenstromes der Befeuchtungsflüssigkeit mit Hilfe von wenigstens zwei Temperaturfühlern 19a, 19b (ggf. auch noch 19c) Temperaturen der zu kühlenden und an der Verdunstungsoberfläche 11 vorbeigeführten Luft an wenigstens zwei unterschiedlichen Positionen in Fließrichtung 15 der Befeuchtungsflüssigkeit parallel zur Verdunstungsoberfläche 11 ermittelt. In Abhängigkeit der für einen Messzeitpunkt ermittelten Temperaturen wird dann der Volumenstrom der über die Befeuchtungseinrichtung 13 zugeführten Befeuchtungsflüssigkeit geregelt. Zu diesem Zweck werden die Temperaturen der den Wärmetauscher 11 passierten Luft, die von den wenigstens zwei Temperaturfühlern 19a, 19b (ggf. auch noch 19c) für den einen Messzeitpunkt gemessen werden, miteinander verglichen. Durch Austrocknung der Verdunstungsoberfläche 11, was zuerst im Bereich der Befeuchtungseinrichtung 13 erfolgt und sich dann in Fließrichtung 15 der Befeuchtungsflüssigkeit fortsetzt, wird die Temperatur des Temperaturfühlers 19a höher sein und/oder stärker ansteigen als für die Temperaturfühler 19b und 19c. Wird ein solcher Temperaturanstieg erkannt, ist der Volumenstrom der zugeführten Befeuchtungsflüssigkeit zu erhöhen, um der Verdunstung entgegen zu wirken. Nach Erhöhung des Volumenstroms sinkt dann bei ausreichender Zuführung von Befeuchtungsflüssigkeit die Temperatur des ersten Temperaturfühlers 19a auf das Niveau des darauf folgenden und in Fließrichtung 15 der Befeuchtungsflüssigkeit angeordneten Temperaturfühlers 19b oder 19c ab, wodurch angezeigt ist, dass die Oberfläche 12 der Verdunstungsoberfläche 11 ausreichend mit Befeuchtungsflüssigkeit benetzt ist und dass der Volumenstrom der der Verdunstungsoberfläche 11 zugeführten Befeuchtungsflüssigkeit wieder reduziert werden kann.

Mit anderen Worten erfolgt auf Basis des Vergleichs der stromab der Verdunstungsoberfläche 11 gemessenen Temperaturen der abzukühlenden bzw. abgekühlten Luft die Regelung des Volumenstromes der Befeuchtungsflüssigkeit, wobei nur dann eine Regelung einsetzt, wenn die wenigstens zwei, für einen Messzeitpunkt an unterschiedlichen Positionen (d.h. an den Positionen der Temperaturfühler 19a und 19b bzw. 19c) ermittelten Temperaturen der zu kühlenden und an der Verdunstungsoberfläche 11 vorbeigeführten Luft voneinander abweichen.

Dabei wird der der Verdunstungsoberfläche 11 zugeführte Volumenstrom der Befeuchtungsflüssigkeit verringert, wenn die ermittelten Temperaturen der zu kühlenden und an der Verdunstungsoberfläche 11 vorbeigeführten Luft an den wenigstens zwei unterschiedlichen Positionen in Fließrichtung 15 der Befeuchtungsflüssigkeit und im Wesentlichen quer zur Strömungsrichtung der zu kühlenden Luft im Wesentlichen identisch sind oder wenn die an wenigstens zwei unterschiedlichen Positionen ermittelten Temperaturen der zu kühlenden und an der Verdunstungsoberfläche 11 vorbeigeführten Luft einen Temperaturanstieg in Fließrichtung 15 der Befeuchtungsflüssigkeit anzeigen, denn diese Bedingungen weisen darauf hin, dass ausreichend Befeuchtungsflüssigkeit im Prozess vorhanden ist. Dieser Fall ist beispielhaft in dem Diagramm von Figur 2 dargestellt, wo die Temperaturen bzw. Temperaturgradienten der abzukühlenden Luft stromab der Wärmetauschfläche 11 (Pfeil 16b) in Fließrichtung FR_{BF} bzw. 15 der Befeuchtungsflüssigkeit aufgetragen sind. Wie ersichtlich ist, steigt die Temperatur vom Wert T₁ an der Position des ersten Temperaturfühlers 19a bis zur Position des zweiten Temperaturfühlers 19b auf T₂ an.

Ferner wird der der Verdunstungsoberfläche 11 zugeführte Volumenstrom der Befeuchtungsflüssigkeit erhöht, wenn die an den wenigstens zwei unterschiedlichen Positionen ermittelten Temperaturen der zu kühlenden und an der Verdunstungsoberfläche 11 vorbeigeführten Luft einen Temperaturanstieg entgegen der Fließrichtung 15 der Befeuchtungsflüssigkeit anzeigen, wie es vorstehend schon für das Szenario der Austrocknung angeführt wurde. Dieser Fall ist beispielhaft in dem Diagramm von Figur 3 dargestellt. Wie dem Diagramm zu entnehmen ist, nimmt die vom ersten Temperaturfühler 19a ermittelte Temperatur T₁ in Fließrichtung FR_{BF} bzw. 15 der Befeuchtungsflüssigkeit bis hin zum zweiten Temperaturfühler 19b auf die Temperatur T₂ ab, wodurch angezeigt ist, dass die Verdunstungsoberfläche 11 nicht hinreichend befeuchtet sondern ausgetrocknet ist. Als entsprechende Maßnahme, um der Austrocknung entgegen zu wirken, wird der Volumenstrom der zur Verdunstungsoberfläche 11 zugeführten Befeuchtungsflüssigkeit erhöht.

Aus den Diagrammen der Figuren 2 und 3 ist ersichtlich, dass zur Regelung des Volumenstromes der der Verdunstungsoberfläche 11 zugeführten Befeuchtungsflüssigkeit das Temperaturprofil der die Verdunstungsoberfläche 11 passierten Luft (Luft-Strom, der mit dem Pfeil 16b in Figur 1 gekennzeichnet ist) bestimmt wird, wobei zu diesem Zweck Temperaturen an zumindest zwei Positionen in Fließrichtung 15 der Befeuchtungsflüssigkeit und mit Bezug auf die Strömungsrichtung der abzukühlenden Luft stromab der Verdunstungsoberfläche 11 ermittelt werden, wobei die Temperaturen direkt das Temperaturprofil ergeben. Alternativ können auch aus den ermittelten Temperaturen, die in einem vorgegebenen zeitlichen Abstand Δt gemessen werden, zeitliche Temperaturgradienten ΔT, d.h. ΔT(Δt) bestimmt werden, aus denen dann das in den Figuren 2 und 3 dargestellte Temperaturprofil abgeleitet wird.

Somit können zur Regelung des Volumenstromes der zugeführten Befeuchtungsflüssigkeit alternativ auch zeitliche Temperaturgradienten ΔT(Δt) mit Hilfe der Temperaturfühler 19a, 19b, 19c bestimmt werden. Die Temperaturgradienten ΔT(Δt) spiegeln dabei einen Vergleich der zeitlichen Temperaturänderung der zu kühlenden Luft stromab der Verdunstungsoberfläche 11 wieder. Dabei erfolgt die Regelung des Volumenstromes der Befeuchtungsflüssigkeit beim Vergleich der zeitlichen Temperaturgradienten ΔT(Δt) analog wie vorstehend bei dem Vergleich der ermittelten Temperaturen T₁ und T₂, wobei die Figuren 2 und 3 sowie deren Beschreibung auch bei Verwendung von Temperaturgradienten ΔT₁ und ΔT₂ Gültigkeit besitzen, so dass hinsichtlich der Regelung auf die vorstehende Beschreibung verwiesen sei. Der Vorteil bei Analyse und Auswertung der zeitlichen Temperaturgradienten ΔT(Δt) ist, dass eine Austrocknung schneller erkannt werden kann und eine Kalibrierung der Temperaturfühler 19a, 19b, 19c untereinander nicht erforderlich ist.

Durch kontinuierliche Messung der Temperaturen mit Hilfe der Temperaturfühler 19a, 19b, 19c entlang der Fließrichtung 15 stromab der Verdunstungsoberfläche 11 und dem anhand dieser Daten erfolgenden Vergleich der Temperaturen und/oder zeitlichen Temperaturgradienten kann dann das vorstehend beschriebene Verfahren zur Regelung des Volumenstromes der Befeuchtungsflüssigkeit über die gesamte Dauer des adiabaten Kühlprozesses erfolgen, wobei es sich bei dem in Figur 1 für den Kontaktbefeuchter 10 dargestellten Prozess um eine direkte adiabate Kühlung handelt.

In Figur 4 ist ein adiabater Kühlprozess anhand eines Luft-Flüssigkeits-Wärmetauschers 20 exemplarisch dargestellt, der die Verdunstungsoberfläche 11, einen Zulauf 21 zur Versorgung der als ein Rohrregister 22 (in Figur 4 ist das Register 22 lediglich exemplarisch angedeutet) ausgebildeten Verdunstungsoberfläche 11 mit einem Wärmeübertragungsmedium und einen Ablauf 23 für das durch das Rohrregister 22 geleitete Wärmeübertragungsmedium aufweist. Die Luft des adiabaten Kühlprozesses strömt seitlich in und durch den Luft-Flüssigkeits-Wärmetauscher 20 und umströmt dabei das Rohrregister 22, bevor die Luft dann seitlich wieder aus dem Luft-Flüssigkeits-Wärmetauscher 20 austritt. Weiterhin ist bei dem Luft-Flüssigkeits-Wärmetauscher 20 die Befeuchtungseinrichtung 13 vorgesehen, durch die beim adiabaten Kühlen die äußere Oberfläche des Rohrregisters 22 mit der Befeuchtungsflüssigkeit benetzt wird, um im Rohrregister 22 bzw. im Luft-Flüssigkeits-Wärmetauscher 20 eine Überfeuchtung zu erreichen, wodurch nochmals Energie zur Kühlung freigesetzt wird. Aufgrund der Schwerkraft gelangt überschüssige Befeuchtungsflüssigkeit in den Sammler 17 unterhalb der Verdunstungsoberfläche 11, bevor es über den Ablauf 18 mit Hilfe einer nicht dargestellten Pumpe im Kreislauf zu dem Zulauf 14 der Befeuchtungseinrichtung 13 zurückgeführt wird. Die Strömung der verwendeten und befeuchteten Luft erfolgt dabei auch wieder gemäß der Pfeile 16a und 16b und im Wesentlichen quer zur Fließrichtung 15 der Befeuchtungsflüssigkeit durch den Luft-Flüssigkeits-Wärmetauscher 20 hindurch, wobei beim adiabaten Kühlen die zu befeuchtende Luft um das Rohrregister herum geleitet wird. Das mit dem Luft-Flüssigkeits-Wärmetauscher 20 durchgeführte Verfahren zur Regelung des Volumenstromes der zugeführten Befeuchtungsflüssigkeit basiert ebenfalls auf einer Messung von Temperaturen der befeuchteten Luft stromab der Verdunstungsoberfläche 11 mit Hilfe der wenigstens zwei Temperaturfühler 19a und 19b (und ggf. des zusätzlichen dritten Temperaturfühlers 19c) und entspricht analog dem vorstehend beschriebenen Regelungs-Verfahren für den Kontakt-Befeuchter 10, so dass auf eine Wiederholung der Ausführungen verzichtet und stattdessen auf obige Beschreibung verwiesen wird. Die in Figur 4 dargestellte Ausführungsform des Luft-Flüssigkeits-Wärmetauscher 20 mit von einem Wärmeübertragungsmedium durchströmten Rohrregister 22 kann dazu verwendet werden, die das Rohrregister 22 umströmende Luft zu befeuchten und auch abzukühlen, so dass das Wärmeübertragungsmedium die Wärme der Luft aufnimmt. Alternativ dazu ist eine Anwendung denkbar, bei der die durch den Luft-Flüssigkeits-Wärmetauscher 20 strömende Luft zwar ebenfalls befeuchtet wird, bei der die Luft jedoch Wärme von dem durch das Rohrregister 22 strömenden Wärmeübertragungsmedium aufnimmt, so dass eine Kühlung des Wärmeübertragungsmediums erfolgt und die Temperatur der befeuchteten Luft ansteigt. Bei einer solchen Prozessführung würde dann die erwärmte Luft an die Umgebung abgeführt werden.

Eine weitere Ausführungsform einer erfindungsgemäßen Vorrichtung ist in Figur 5 gezeigt, die hier als ein Luft-Luft-Plattenwärmetauscher 30 ausgeführt ist. Hierbei ist die Verdunstungsoberfläche 11 als Teil des Luft-Luft-Plattenwärmetauschers 30 ausgebildet, wobei die Kühlung der Luft im Gegensatz zu den vorherigen beiden Ausführungsformen indirekt adiabat erfolgt und eine Befeuchtung der zu kühlenden Luft unterbleibt. Der Luft-Luft-Plattenwärmetauscher 30 weist die Befeuchtungseinrichtung 13 auf, welche einen Kühlluft-Strom 31 vor seinem Eintritt in den Luft-Luft-Plattenwärmetauscher 30 mit der Befeuchtungsflüssigkeit befeuchtet. Der aus dem Luft-Luft-Plattenwärmetauscher 30 austretende Kühlluft-Strom 32 wird dann beispielsweise ins Freie abgeführt und nimmt nicht weiter am Kühlprozess teil. Anders verhält es sich mit der Befeuchtungsflüssigkeit, welche den in den Luft-Luft-Plattenwärmetauscher 30 eintretenden Kühlluft-Strom 31 befeuchtet. Die überschüssige Befeuchtungsflüssigkeit durchströmt aufgrund der Schwerkraft den Luft-Luft-Plattenwärmetauscher 30 und gelangt austrittsseitig in den Sammler 17 unterhalb des Luft-Luft-Plattenwärmetauschers 30. Über den Ablauf 18 kann die Befeuchtungsflüssigkeit dann entweder aus dem System bzw. der Vorrichtung abgeführt oder aber mit Hilfe einer Pumpe zurück zu der Befeuchtungseinrichtung 13 gefördert werden, wie es vorstehend schon für die anderen Ausführungsbeispiele beschrieben worden ist. Die zu kühlende Luft wird wiederum im Wesentlichen quer zur Fließrichtung 15 der Befeuchtungsflüssigkeit geführt (siehe Pfeile 16a und 16b in Figur 3). Dabei werden zur Bestimmung des Grades der Austrocknung die Temperaturen der abgekühlten Luft (der mit dem Pfeils 16b gekennzeichnete Luft-Strom in Figur 3) mit Hilfe der Temperaturfühler 19a, 19b und ggf. 19c stromab des Luft-Luft-Plattenwärmetauschers 30 gemessen. Somit sind die Temperaturfühler 19a, 19b und ggf. 19c außerhalb des Luft-Luft-Plattenwärmetauschers 30 an dessen Austrittsseite 33 für die zu kühlende Luft bzw. zur Temperaturmessung der nun abgekühlten Luft angeordnet, wobei die zu kühlende Luft im Vergleich zu den vorstehenden beiden Ausführungsformen keine Feuchtigkeit aufnimmt, weil ein direkter Austausch zwischen abzukühlender Luft und der Befeuchtungsflüssigkeit nicht stattfindet.

Bei dem Luft-Luft-Plattenwärmetauscher 30 erfolgt der Wärmeaustausch zwischen der zu kühlenden Luft und dem Kühlluft-Strom 31, der vor seinem Eintritt in den Luft-Luft-Plattenwärmetauscher 30 mit Befeuchtungsflüssigkeit befeuchtet wird, adiabat indirekt. Dabei fließt die überschüssige, nicht von dem Kühlluft-Strom 31 aufgenommene Befeuchtungsflüssigkeit entlang der vertikalen Fließrichtung 15 durch den Luft-Luft-Plattenwärmetauscher 30 und wird austrittsseitig von dem Sammler 17 aufgefangen. Die Regulierung des Volumenstromes der Befeuchtungsflüssigkeit durch die Befeuchtungseinrichtung 13 erfolgt so, wie es für die anderen beiden Ausführungsformen bereits beschrieben wurde, so dass von einer detaillierten Beschreibung des Verfahrens abgesehen wird, um Wiederholungen zu vermeiden. Es sei vielmehr auf die Ausführungen zur ersten Ausführungsform des Kontaktbefeuchters 10 verwiesen, wo sehr ausführlich die einzelnen Verfahrensschritte zur Regulierung des Volumenstromes der Befeuchtungsflüssigkeit beschrieben wurden.

Es sei angemerkt, dass unter Vorrichtung (Kontaktbefeuchter 10, Luft-Flüssigkeits-Wärmetauscher 20 und Luft-Luft-Plattenwärmetauscher 30) im Sinne der Erfindung ein System aus zumindest Verdunstungsoberfläche 11, Befeuchtungseinrichtung 13 und Sammler 17 zu verstehen ist, die zum Zwecke der adiabaten Kühlung von Luft zusammenwirken.

Zusammenfassend ist vorstehend für ein erstes Ausführungsbeispiel in Form eines Kontaktbefeuchters 10 ein adiabater Prozess beschrieben worden, der aus einer befeuchteten Struktur im Inneren besteht. Um die Verdunstung des Wassers bzw. der Befeuchtungsflüssigkeit zu verbessern, wird ein Luftstrom von zu kühlender Luft über die Struktur bzw. Oberfläche 12 des Kontaktbefeuchters 10 geleitet. Das Wasser bzw. die Befeuchtungsflüssigkeit, das/die zur Befeuchtung dient, wird über den Zulauf 14 und die Befeuchtungseinrichtung 13 in die Struktur gebracht und fliesst an ihr durch die Schwerkraft hinab. Um eine Verkalkung der Struktur bzw. Oberfläche 12 zu vermeiden, wird mit einem Wasserüberschuss befeuchtet. Das überschüssige Wasser bzw. die überschüssige Befeuchtungsflüssigkeit läuft aus dem Kontaktbefeuchter 10 ab und geht dem Prozess verloren. Das befeuchtete Element bzw. die befeuchtete Oberfläche 12, die eine Verdunstungsoberfläche 11 darstellt, nimmt Wasser bzw. Befeuchtungsflüssigkeit durch seine grosse Oberfläche 12 und die Oberflächenspannung des Wassers und/oder durch dessen poröse Struktur auf und speichert es.

Wenn die Wasserzufuhr bzw. die Zufuhr von Befeuchtungsflüssigkeit auf das zu befeuchtende Element, welches die Verdunstungsoberfläche 11 darstellt, abgeschaltet oder der zugeführte Volumenstrom der Befeuchtungsflüssigkeit reduziert wird, beginnt das Element aufgrund der gespeicherten Befeuchtungsflüssigkeit langsam auszutrocknen und die Kühlleistung der Vorrichtung nimmt kontinuierlich ab. Diese Kühlleistungsreduzierung wirkt sich in höheren Temperaturen nach dem adiabaten Prozess aus. Die Austrocknung beginnt in Fließrichtung 15 der Befeuchtungsflüssigkeit, startet im Bereich der Befeuchtungseinrichtung 13 (der Wasserzuführung) und setzt sich in Fließrichtung 15 der Befeuchtungsflüssigkeit im Element fort. Durch mehrere Temperaturfühler 19a, 19b, 19c, wobei zumindest zwei Temperaturfühler notwendig sind und in Fließrichtung 15 der Befeuchtungsflüssigkeit mit Bezug auf die Strömungsrichtung der abzukühlenden Luft stromab der Verdunstungsoberfläche 11 angeordnet sind, lässt sich die Austrocknung messtechnisch erfassen. Es wird zwischen mindestens dem oberen Temperaturfühler (19a) und dem unteren Temperaturfühler (19b) unterschieden. Es können noch weitere Temperaturfühler 19c in Fließrichtung 15 der Befeuchtungsflüssigkeit verwendet werden, um die Austrocknung genauer erfassen zu können.

Durch diese indirekte messtechnische Erfassung der Austrocknung hat man die Regelgrössen für die Zu- und Abschaltung des Wasserzulaufs (Befeuchtungsflüssigkeit) bzw. die Regelung des Umwälzwasserstroms. Wenn die Befeuchterwasserzufuhr abgeschaltet oder im Volumenstrom reduziert wird, steigt am nächsten Temperaturfühler 19a zur Befeuchtungsstelle (d.h. im Bereich der Befeuchtungseinrichtung 13) im Element zuerst die Temperatur durch die Austrocknung. Erkennt man diesen Temperaturanstieg im Vergleich zu dem in Fliessrichtung 15 nächsten Temperaturfühler 19b oder 19c, beginnt das befeuchtete Element auszutrocknen. Wird ein solcher Temperaturanstieg erkannt, ist der Wasserzulauf zu öffnen oder der Umlaufwasserstrom zu erhöhen. Nach einer gewissen Zeit sinkt die Temperatur des ersten Temperaturfühlers 19a zur Befeuchtungsstelle auf das Niveau des darauffolgenden Temperaturfühlers 19b oder 19c und das Element ist wieder vollständig befeuchtet. Eine Abschaltung der Wasserzuführung bzw. der Zuführung von Befeuchtungsflüssigkeit oder die Reduzierung des Wasserstroms bzw. des Volumenstromes der Befeuchtungsflüssigkeit kann wieder erfolgen und der Regelprozess kann wie beschrieben erneut erfolgen.

Neben dem beschriebenen Temperaturvergleich zwischen den Temperaturfühlern 19a, 19b, 19c ist auch ein Vergleich der zeitlichen Temperaturänderung zur Regelung der Befeuchterwassermenge bzw. des Volumenstromes der Befeuchtungsflüssigkeit möglich. Diese Temperaturgradienten werden analog wie beschrieben eingesetzt. Der Vorteil der Temperaturgradienten ist, dass man schneller eine Austrocknung erkennt und eine Kalibrierung der Temperaturfühler 19a, 19b, 19c untereinander nicht erforderlich ist. Die Temperaturfühler 19a, 19b, 19c können ebenfalls bei einem Luft-Luft-(Kreuz)Wärmetauscher auch auf der nicht befeuchteten Seite der abzukühlenden Luft angeordnet sein.

Es wurde vorstehend ein Regelsystem zur adiabaten Kühlung von Luft vorgestellt, das mit Hilfe von Temperaturfühlern 19a, 19b, 19c arbeitet, die mit der Fliessrichtung 15 des Befeuchterwassers bzw. der Befeuchtungsflüssigkeit auf der Luftaustrittsseite des Kontaktbefeuchters 10 oder eines befeuchteten Flüssig-Luft-Wärmetauschers 20 oder auf der nicht befeuchteten Luftseite des Luft-Luft-Kreuzwärmetauschers 30 (indirekte Messung) angeordnet sind. Das Regelsystem dient der Reduzierung des überschüssigen ablaufenden Wasservolumenstromes oder der Pumpenleistung bei einem Umlaufwassersystem. Der Prozess wird bezüglich des Befeuchterwasserverbrauchs (Verbrauch der Befeuchtungsflüssigkeit) oder der Umlaufpumpenleistung abhängig von den Luftkonditionen geregelt, in dem das Wasser bzw. die Befeuchtungsflüssigkeit über den Zulauf 14 in den adiabaten Prozess ab- und zugeschaltet wird oder im Wasservolumenstrom geregelt wird.

Nach einem Temperaturvergleich des zur Wasserzuführung nächsten Temperaturfühlers (oberen Temperaturfühler 19a) mit einem in Fliessrichtung 15 des Befeuchterwassers darauffolgenden Temperaturfühler (z.B. unteren Temperaturfühler 19b oder mittlerer Temperaturfühler 19c) wird nach deren Abweichung das Befeuchterwasser über den Zulauf 14 zu- oder abgeschaltet oder der Umlaufwasservolumenstrom geregelt.

Wenn die Temperatur des nächsten Temperaturfühlers 19a zur Wasserzuführung 13 auf das befeuchtete Element (d.h. die Wärmetauschfläche 11) in den adiabaten Prozess zu den darauffolgenden Temperaturfühlern 19b oder 19c höher ist, findet eine Austrocknung im befeuchteten Element statt und Wasser bzw. Befeuchtungsflüssigkeit ist über den Zulauf 14 zuzuschalten oder der Umlaufwasservolumenstrom ist zu erhöhen.

Falls die Temperatur des nächsten Temperaturfühlers 19a zum Wassereintritt (Zulauf 14) in den adiabaten Prozess zu den darauffolgenden Temperaturfühler 19b oder 19c niedriger oder gleich ist, ist ausreichend Wasser/Befeuchtungsflüssigkeit im adiabaten Prozess vorhanden und das Wasser bzw. die Befeuchtungsflüssigkeit über den Zulauf 14 kann abgeschalten oder in der Fliessmenge bzw. der Volumenstrom reduziert werden.

Durch Kalibrierung der Temperaturfühler 19a, 19b und ggf. 19c kann eine bewusste Temperaturdifferenz zwischen den Temperaturfühlern 19a, 19b, 19c erreicht werden, wodurch die überschüssige Wassermenge bzw. Befeuchtungsflüssigkeit geregelt werden kann. Mit anderen Worten können zur Regelung einer beim Befeuchten stets vorhandenen überschüssigen Menge an Befeuchtungsflüssigkeit die Temperaturfühler 19a, 19b für den Vergleich der ermittelten Temperaturen T₁, T₂ vor dem Befeuchten der Verdunstungsoberfläche 11 und dem adiabaten Kühlen derart kalibriert werden, dass die Temperaturfühler 19a, 19b vor dem Beginn des Befeuchtens eine gewünschte Temperaturdifferenz in Fließrichtung 15 der Befeuchtungsflüssigkeit aufweisen. Diese voreingestellte und gewünschte Temperaturdifferenz zwischen den Temperaturfühlern 19a, 19b ist dabei so gewählt, dass vor dem Befeuchten und vor dem adiabaten Kühlen ein scheinbarer Temperaturanstieg entgegen der Fließrichtung 15 angezeigt wird, was eine Erhöhung des Volumenstroms der zugeführten Befeuchtungsflüssigkeit bedeutet. Wenn dann der adiabate Kühlprozess und die dafür vorgesehene Befeuchtung gestartet werden, garantiert die voreingestellte und gewünschte Temperaturdifferenz, dass immer ein gewisser Überschuss an Befeuchtungsflüssigkeit vorhanden ist und einer Eintrocknung von Wasserinhaltsstoffen auf der Verdunstungsoberfläche 11 entgegenwirkt.

Verfahrensmäßig wird nach einem Temperaturgradientenvergleich des zur Wasserzuführung (Zulauf 14) nächsten Temperaturfühlers 19a (oberen Temperaturfühler) mit einem in Fliessrichtung 15 des Befeuchterwassers darauffolgenden Temperaturfühler 19b oder 19c nach Abweichung das Befeuchterwasser bzw. die Befeuchtungsflüssigkeit über den Zulauf 14 zu- oder abgeschaltet oder im Umlaufwasservolumenstrom geregelt und reduziert.

Wenn der Temperaturgradient des nächsten Temperaturfühlers 19a zur Wasserzuführung auf das Befeuchtungselement (Verdunstungsoberfläche 11) in den adiabaten Prozess zu den darauffolgenden Temperaturfühlern 19b oder 19c höher ist, findet eine Austrocknung im befeuchteten Element
(Verdunstungsoberfläche 11) statt und
Wasser/Befeuchtungsflüssigkeit ist über den Zulauf 14 zuzuschalten oder der Umlaufwasservolumenstrom ist zu erhöhen.

Falls der Temperaturgradient des nächsten Temperaturfühlers 19a zum Wassereintritt (Zulauf 14) im adiabaten Prozess zu den darauffolgenden Temperaturfühlern 19b oder 19c niedriger oder gleich ist, ist ausreichend Wasser/Befeuchtungsflüssigkeit im adiabaten Prozess vorhanden und das Wasser bzw. die Befeuchtungsflüssigkeit kann über den Zulauf 14 abgeschaltet oder im Volumenstrom reduziert werden.

Um eine schleichende Temperaturerhöhung aus den Temperaturgradientenvergleichen zu vermeiden, wird für eine einstellbare Zeit das Zulaufwasser zugeschalten oder mit dem maximal möglichen Wasserstrom befeuchtet.

Um ferner ein Eintrocknen von Mineralen und anderen Inhaltsstoffen des Wassers bzw. der Befeuchtungsflüssigkeit im befeuchteten Element zu reduzieren, wird nach der Abschaltung des adiabaten Kühlprozesses das Befeuchterwasser auf das zu befeuchtende Element für eine einstellbare Zeit fortgeführt und danach abgeschaltet.

Bei allen dargestellten Ausführungsformen und denkbaren Abwandlungen davon kann eine Regulierung des Volumenstromes der zugeführten Befeuchtungsflüssigkeit mit Hilfe entsprechender Ventile zum Ein- und Abschalten oder entsprechender Regelventile zur Regulierung des Volumenstroms zum Beispiel an der Befeuchtungseinrichtung 13 oder mit Hilfe einer drehzahlgesteuerten Pumpe erfolgen. Ferner kann für eine vorbestimmte Zeitdauer die Befeuchtungsflüssigkeit mit maximalem Volumenstrom der Verdunstungsoberfläche 11 zugeführt werden, um nach Beendigung des adiabaten Kühlprozesses ein Eintrocknen von Mineralien oder Verkalkungen an der Verdunstungsoberfläche 11 zu vermeiden. Die für eine vorbestimmte Zeitdauer vorgesehene Zuführung mit maximalem Volumenstrom der Befeuchtungsflüssigkeit kann aber auch dazu dienen, eine schleichende Temperaturerhöhung bei dem Temperaturgradientenvergleich zu vermeiden.

Im Sinne der Erfindung ist der in der vorstehenden Beschreibung und in den Ansprüchen zur Bezeichnung des Verfahrens und der Vorrichtung verwendete Ausdruck des "Regelns eines Volumenstromes einer Befeuchtungsflüssigkeit" gleichbedeutend zu den Ausdrücken "Regeln der Feuchtigkeit von Luft" oder sogar "Luftfeuchtigkeitsregeln", wobei die Regelung in jedem Fall im Rahmen eines adiabten Kühlprozesses durchgeführt wird, bei dem die Luft verwendet wird, deren ausreichende Befeuchtung zu gewährleisten ist. Das erfindungsgemäße Verfahren sowie die für das Verfahren geeignete Vorrichtung dienen dazu, die Befeuchtung der beim adiabaten Kühlen verwendeten Luft in Abhängigkeit einer beginnenden Austrocknung der Verdunstungsoberfläche mit Hilfe des der Verdunstungsfläche zugeführten Volumenstromes zu regeln.

Die vorstehend beschriebene Erfindung ist selbstverständlich nicht auf die beschriebenen und dargestellten Ausführungsformen beschränkt. Es ist ersichtlich, dass an den in der Zeichnung dargestellten Ausführungsformen zahlreiche, dem Fachmann entsprechend der beabsichtigten Anwendung naheliegende Abänderungen vorgenommen werden können, ohne dass dadurch der Bereich der Erfindung verlassen wird.

## Patentansprüche

1. Verfahren zum Regeln eines Volumenstromes einer Befeuchtungsflüssigkeit beim adiabten Kühlen, wobei eine Verdunstungsoberfläche (11) mit der entlang der Verdunstungsoberfläche (11) fließenden Befeuchtungsflüssigkeit befeuchtet wird und die zu kühlende und/oder zu befeuchtende Luft im Wesentlichen quer zur Fließrichtung (15) der Befeuchtungsflüssigkeit über die Verdunstungsoberfläche (11) geführt wird,
**dadurch gekennzeichnet, dass**
nach einer vorbestimmten Zeitdauer des Befeuchtens der Verdunstungsoberfläche (11) der Volumenstrom der über die Verdunstungsoberfläche (11) fließenden Befeuchtungsflüssigkeit reduziert wird und nach dem Reduzieren des Volumenstroms Temperaturen (T₁, T₂) und/oder zeitliche Temperaturgradienten (ΔT₁, ΔT₂) der an der Verdunstungsoberfläche (11) vorbeigeführten Luft an wenigstens zwei unterschiedlichen Positionen in Fließrichtung (15) der Befeuchtungsflüssigkeit im Wesentlichen parallel zur Verdunstungsoberfläche (11) ermittelt werden, wobei der Volumenstrom der Befeuchtungsflüssigkeit in Abhängigkeit der ermittelten Temperaturen (T₁, T₂) und/oder zeitlichen Temperaturgradienten (ΔT₁, ΔT₂) geregelt wird.

2. Verfahren nach Anspruch 1, **dadurch gekennzeichnet, dass** zur Regelung des der Verdunstungsoberfläche (11) zugeführten Volumenstromes der Befeuchtungsflüssigkeit wenigstens zwei, für einen Messzeitpunkt an unterschiedlichen Positionen ermittelte Temperaturen (T₁, T₂) oder wenigstens zwei an unterschiedlichen Positionen ermittelte zeitliche Temperaturgradienten (ΔT₁, ΔT₂) der an der Verdunstungsoberfläche (11) vorbeigeführten Luft verglichen werden.

3. Verfahren nach Anspruch 1 oder 2, **dadurch gekennzeichnet, dass** der der Verdunstungsoberfläche (11) zugeführte Volumenstrom der Befeuchtungsflüssigkeit bei Abweichung von wenigstens zwei, für einen Messzeitpunkt an unterschiedlichen Positionen ermittelten Temperaturen (T₁, T₂) oder von wenigstens zwei an unterschiedlichen Positionen ermittelten zeitlichen Temperaturgradienten (ΔT₁, ΔT₂) der an der Verdunstungsoberfläche (11) vorbeigeführten Luft geregelt wird.

4. Verfahren nach einem der vorhergehenden Ansprüche, **dadurch gekennzeichnet, dass** der der Verdunstungsoberfläche (11) zugeführte Volumenstrom der Befeuchtungsflüssigkeit verringert wird, wenn die ermittelten Temperaturen (T₁, T₂) oder zeitlichen Temperaturgradienten (ΔT₁, ΔT₂) der an der Verdunstungsoberfläche (11) vorbeigeführten Luft an den wenigstens zwei unterschiedlichen Positionen in Fließrichtung (15) der Befeuchtungsflüssigkeit und im Wesentlichen quer zur Strömungsrichtung der zu kühlenden Luft im Wesentlichen identisch sind oder wenn die an wenigstens zwei unterschiedlichen Positionen ermittelten Temperaturen (T₁, T₂) oder zeitlichen Temperaturgradienten (ΔT₁, ΔT₂) der an der Verdunstungsoberfläche (11) vorbeigeführten Luft einen Temperaturanstieg in Fließrichtung (15) der Befeuchtungsflüssigkeit anzeigen.

5. Verfahren nach einem der vorhergehenden Ansprüche, **dadurch gekennzeichnet, dass** der der Verdunstungsoberfläche (11) zugeführte Volumenstrom der Befeuchtungsflüssigkeit erhöht wird, wenn die an den wenigstens zwei unterschiedlichen Positionen ermittelten Temperaturen (T₁, T₂) oder zeitlichen Temperaturgradienten (ΔT₁, ΔT₂) der an der Verdunstungsoberfläche (11) vorbeigeführten Luft einen Temperaturanstieg entgegen der Fließrichtung (15) der Befeuchtungsflüssigkeit anzeigen.

6. Verfahren nach einem der vorhergehenden Ansprüche, **dadurch gekennzeichnet, dass** für eine vorbestimmte Zeitdauer die Befeuchtungsflüssigkeit mit im Vergleich zum geregelten Volumenstrom erhöhten Volumenstrom der Verdunstungsoberfläche (11) zugeführt wird.

7. Verfahren nach einem der vorhergehenden Ansprüche, **dadurch gekennzeichnet, dass** die Verdunstungsoberfläche (11) eine mit Befeuchtungsflüssigkeit benetzbare Oberfläche (12) eines Kontaktbefeuchters (10) ist, an dem die zu kühlende Luft vorbeigeführt wird.

8. Verfahren nach einem der Ansprüche 1 bis 6, **dadurch gekennzeichnet, dass** die Verdunstungsoberfläche (11) als Rohrregister (22) eines Luft-Flüssigkeits-Wärmetauschers (20) ausgebildet ist, bei dem zum adiabaten Kühlen ein Wärmeübertragungsmedium durch das Rohrregister (22) geführt wird und die zu befeuchtende Luft um das Rohrregister (22) herum geleitet wird, wobei beim Kühlen die äußere Oberfläche des Rohrregisters (22) mit Befeuchtungsflüssigkeit befeuchtet wird.

9. Verfahren nach einem der Ansprüche 1 bis 6, **dadurch gekennzeichnet, dass** die Verdunstungsoberfläche (11) als Teil eines Luft-Luft-Plattenwärmetauschers (30) ausgebildet ist, bei dem Kühlluft (31) vor ihrem Eintritt in den Luft-Luft-Plattenwärmetauscher (30) mit der Befeuchtungsflüssigkeit befeuchtet wird.

10. Verfahren nach einem der vorhergehenden Ansprüche, **dadurch gekennzeichnet, dass** die Temperaturen (T₁, T₂) mit Hilfe von entsprechenden Temperaturfühlern (19a, 19b, 19c) ermittelt werden, wobei die Temperaturfühler (19a, 19b, 19c) für den Vergleich von ermittelten Temperaturen (T₁, T₂) vor dem Befeuchten der Verdunstungsoberfläche (11) und dem adiabaten Kühlen derart kalibriert werden, dass die Temperaturfühler (19a, 19b, 19c) vor dem Beginn des Befeuchtens eine gewünschte Temperaturdifferenz in Fließrichtung (15) der Befeuchtungsflüssigkeit aufweisen.

11. Vorrichtung zum Regeln eines Volumenstromes einer Befeuchtungsflüssigkeit beim adiabaten Kühlen, die eine Verdunstungsoberfläche (11) aufweist, die mit der von einer Befeuchtungseinrichtung (13) bereitgestellten Befeuchtungsflüssigkeit befeuchtbar ist und die beim adiabten Kühlen und/oder Befeuchten mit der zu kühlenden und/oder zu befeuchtenden Luft Wärme austauschen kann, wobei der Volumenstrom der beim Kühlen und/oder Befeuchten entlang der Verdunstungsoberfläche (11) fließenden Befeuchtungsflüssigkeit regulierbar ist, wobei die zu kühlende und/oder zu befeuchtende Luft im Wesentlichen quer zur Fließrichtung (15) der Befeuchtungsflüssigkeit und über die Verdunstungsoberfläche (11) strömt, und wobei zur Regulierung des Volumenstromes der Befeuchtungsflüssigkeit wenigstens zwei Temperaturfühler (19a, 19b, 19c) vorgesehen sind,
**dadurch gekennzeichnet, dass**
die wenigstens zwei Temperaturfühler (19a, 19b, 19c) in Fließrichtung (15) der Befeuchtungsflüssigkeit und mit Bezug auf die Strömungsrichtung (16b) der zu kühlenden Luft stromab der Verdunstungsoberfläche (11) angeordnet sind und Temperaturen an zwei unterschiedlichen Positionen in Fließrichtung (15) der Befeuchtungsflüssigkeit parallel zur Verdunstungsoberfläche ermitteln.

12. Vorrichtung nach Anspruch 11, **dadurch gekennzeichnet, dass** die Verdunstungsoberfläche (11) eine mit der Befeuchtungsflüssigkeit benetzbare Oberfläche (12) eines Kontaktbefeuchters (10) ist und dass das Kühlen der zu kühlenden Luft direkt adiabat erfolgt.

13. Vorrichtung nach Anspruch 11, **dadurch gekennzeichnet, dass** die Verdunstungsoberfläche (11) als Rohrregister (22) eines Luft-Flüssigkeits-Wärmetauschers (20) ausgebildet ist, bei dem ein Wärmeübertragungsmedium durch das Rohrregister (22) fließt und die zu kühlende Luft das Rohrregister (22) umströmt, wobei der Luft-Flüssigkeits-Wärmetauscher (20) die Befeuchtungseinrichtung (13) aufweist, durch welche die äußere Oberfläche des Rohrregister (22) mit der Befeuchtungsflüssigkeit benetzbar ist.

14. Vorrichtung nach Anspruch 11, **dadurch gekennzeichnet, dass** die Verdunstungsoberfläche (11) als Teil eines Luft-Luft-Plattenwärmetauschers (30) ausgebildet ist, bei dem die zu kühlende Luft ihre Wärme mit einer vor ihrem Eintritt in den Luft-Luft-Plattenwärmetauscher (30) mit der Befeuchtungsflüssigkeit befeuchteten Kühlluft indirekt adiabat austauscht.

15. Vorrichtung nach Anspruch 11, **dadurch gekennzeichnet, dass** die wenigstens zwei Temperaturfühler (19a, 19b, 19c) außerhalb des Luft-Luft-Plattenwärmetauschers (30) an dessen Austrittsseite (33) für die zu kühlende Luft angeordnet sind.

## Claims

1. A method for regulating a volume flow of a wetting fluid during adiabatic cooling, wherein an evaporation surface (11) is wetted with a wetting fluid flowing along the evaporation surface (11) and the air to be cooled and/or to be humidified is essentially passed normal to the flow direction (15) of the wetting fluid over the evaporation surface (11),
**characterised in that**,
after a predetermined period of wetting of the evaporation surface (11), the volume flow of the wetting fluid flowing over the evaporation surface (11) is reduced and, following the reduction of the volume flow, temperatures (T₁, T₂) and/or time-related temperature gradients (ΔT₁, ΔT₂) of the air conveyed past the evaporation surface (11) are ascertained at at least two different positions in the flow direction (15) of the wetting fluid essentially parallel to the evaporation surface (11), wherein the volume flow of the wetting fluid is regulated as a function of the ascertained temperatures (T₁, T₂) and/or time-related temperature gradients (ΔT₁, ΔT₂).

2. The method according to claim 1, **characterised in that**, in order to regulate the volume flow of the wetting fluid fed to the evaporation surface (11), at least two temperatures (T₁, T₂) ascertained for a measurement time at different positions or at least two time-related temperature gradients (ΔT₁, ΔT₂) of the air conveyed past the evaporation surface (11) ascertained at different positions are compared.

3. The method according to claim 1 or 2, **characterised in that** the volume flow of the wetting fluid fed to the evaporation surface (11) is regulated in the event of a deviation of at least two temperatures (T₁, T₂) ascertained for a measurement time at different positions or at least two time-related temperature gradients (ΔT₁, ΔT₂) of the air conveyed past the evaporation surface (11) ascertained at different positions.

4. The method according to any one of the preceding claims, **characterised in that** the volume flow of the wetting fluid fed to the evaporation surface (11) is reduced if the ascertained temperatures (T₁, T₂) or time-related temperature gradients (ΔT₁, ΔT₂) of the air conveyed past the evaporation surface (11) are essentially identical at the at least two different positions in the flow direction (15) of the wetting fluid and essentially normal to the flow direction of the air to be cooled or if the temperatures (T₁, T₂) or time-related temperature gradients (ΔT₁, ΔT₂) of the air conveyed past the evaporation surface (11) ascertained at at least two different positions exhibit a temperature increase in the flow direction (15) of the wetting fluid.

5. The method according to any one of the preceding claims, **characterised in that** the volume flow of the wetting fluid fed to the evaporation surface (11) is increased if the temperatures (T₁, T₂) or time-related temperature gradients (ΔT₁, ΔT₂) of the air conveyed past the evaporation surface (11) ascertained at the at least two different positions exhibit a temperature increase against the flow direction (15) of the wetting fluid.

6. The method according to any one of the preceding claims, **characterised in that**, for a predetermined period, the wetting fluid is fed to the evaporation surface (11) with a volume flow that is increased compared to the regulated volume flow.

7. The method according to any one of the preceding claims, **characterised in that** the evaporation surface (11) is a surface (12) of a contact humidifier (10), which surface is wettable with wetting fluid and past which the air to be cooled is conveyed.

8. The method according to any one of claims 1 to 6, **characterised in that** the evaporation surface (11) is constituted as a pipe register (22) of an air-liquid heat exchanger (20), wherein a heat-transmitting medium is conveyed through the pipe register (22) for the adiabatic cooling and the air to be humidified is conveyed around the pipe register (22), wherein the outer surface of the pipe register (22) is wetted with wetting fluid during cooling.

9. The method according to any one of claims 1 to 6, **characterised in that** the evaporation surface (11) is constituted as part of an air-to-air plate heat exchanger (30), wherein cooling air (31) is humidified with wetting fluid before its entry into the air-to-air plate heat exchanger (30).

10. The method according to any one of the preceding claims, **characterised in that** the temperatures (T₁, T₂) are ascertained with the aid of corresponding temperature sensors (19a, 19b, 19c), wherein the temperature sensors (19a, 19b, 19c) are calibrated for the comparison of ascertained temperatures (T₁, T₂) before the wetting of the evaporation surface (11) and the adiabatic cooling, in such a way that the temperature sensors (19a, 19b, 19c) have a desired temperature difference in the flow direction (15) of the wetting fluid before the start of the wetting.

11. A device for regulating a volume flow of a wetting fluid during adiabatic cooling, which device comprises an evaporation surface (11) which can be wetted with the wetting fluid provided by a humidifier (13) and which, during the adiabatic cooling and/or wetting, can exchange heat with the air to be cooled and/or to be humidified, wherein the volume flow of the wetting fluid flowing along the evaporation surface (11) during the cooling and/or wetting can be regulated, wherein the air to be cooled and/or to be humidified flows essentially normal to the flow direction (15) of the wetting fluid and over the evaporation surface (11), and wherein at least two temperature sensors (19a, 19b, 19c) are provided to regulate the volume flow of the wetting fluid,
**characterised in that**
the at least two temperature sensors (19a, 19b, 19c) are disposed in the flow direction (15) of the wetting fluid and, with respect to the flow direction (16b) of the air to be cooled, downstream of the evaporation surface (11) and ascertain temperatures at two different positions in the flow direction (15) of the wetting fluid parallel to the evaporation surface.

12. The device according to claim 11, **characterised in that** the evaporation surface (11) is a surface (12) of a contact humidifier (10) wettable with the wetting fluid and that the cooling of the air to be cooled takes place directly adiabatically.

13. The device according to claim 11, **characterised in that** the evaporation surface (11) is constituted as a pipe register (22) of an air-liquid heat exchanger (20), wherein a heat-transmitting medium flows through the pipe register (22) and the air to be cooled flows around the pipe register (22), wherein the air-liquid heat exchanger (20) comprises the humidifier (13) by means of which the outer surface of the pipe register (22) can be wetted with the wetting fluid.

14. The device according to claim 11, **characterised in that** the evaporation surface (11) is constituted as part of an air-to-air plate heat exchanger (30), wherein the air to be cooled exchanges its heat indirectly adiabatically with cooling air humidified with wetting fluid before its entry into the air-to-air plate heat exchanger (30).

15. The device according to claim 11, **characterised in that** the at least two temperature sensors (19a, 19b, 19c) are disposed outside the air-to-air plate heat exchanger (30) at its exit side (33) for the air to be cooled.

## Revendications

1. Procédé de réglage d'un débit volumétrique d'un liquide d'humidification lors d'un refroidissement adiabatique, dans lequel une surface d'évaporation (11) est humidifiée avec le liquide d'humidification s'écoulant le long de la surface d'évaporation (11) et l'air refroidissant et/ou humidifiant est guidé essentiellement transversalement à la direction d'écoulement (15) du liquide d'humidification sur la surface d'évaporation (11),
**caractérisé en ce**
**qu'**après une durée temporelle prédéterminée d'humidification de la surface d'évaporation (11), le débit volumique du liquide d'humidification s'écoulant sur la surface d'évaporation (11) est réduit, et après la réduction du débit volumique des températures (T₁, T₂) et/ou des gradients de température temporels (ΔT₁, ΔT₂) de l'air avancé sur la surface d'évaporation (11) sont déterminés à au moins deux positions différentes dans la direction d'écoulement (15) du liquide d'humidification essentiellement parallèlement à la surface d'évaporation (11), dans lequel le débit volumique du liquide d'humidification est réglé en fonction des températures déterminées(T₁, T₂) et/ou des gradients de température temporels (ΔT₁, ΔT₂).

2. Procédé selon la revendication 1, **caractérisé en ce que** pour régler le débit volumique du liquide d'humidification introduit sur la surface d'évaporation (11), au moins deux températures (T₁, T₂) déterminées pour un point temporel de mesure à différentes positions ou au moins deux gradients de température (ΔT₁, ΔT₂) déterminées temporellement à différentes positions de l'air avancé sur la surface d'évaporation (11) sont comparées.

3. Procédé selon la revendication 1 ou 2, **caractérisé en ce que** le débit volumique du liquide d'humidification introduit sur la surface d'évaporation (11) est réglé en présence d'un écart d'au moins deux températures (T₁, T₂), déterminé pour un point de mesure temporelle à différentes positions ou d'au moins deux gradients de température temporels (ΔT₁, ΔT₂) déterminés à différentes positions de l'air avancé sur la surface d'évaporation (11).

4. Procédé selon une des revendications précédentes, **caractérisé en ce que** le débit volumique du liquide d'humidification introduit sur la surface d'évaporation (11) est diminué lorsque les températures déterminées (T₁, T₂) ou les gradients de température temporels (ΔT₁, ΔT₂) de l'air avancé sur la surface d'évaporation (11) sont essentiellement identiques à au moins deux positions différentes dans la direction d'écoulement (15) et essentiellement transversalement à la direction d'écoulement de l'air à refroidir ou lorsque les températures déterminées (T₁, T₂) ou les gradients de température temporels (ΔT₁, ΔT₂) de l'air avancé sur la surface d'évaporation (11) à au moins deux positions différentes présentent une hausse de température dans la direction d'écoulement (15) du liquide d'humidification.

5. Procédé selon une des revendications précédentes **caractérisé en ce que** le débit volumique du liquide d'humidification introduit sur la surface d'évaporation (11)est augmenté lorsque les températures déterminées (T₁, T₂) ou les gradients de température temporels (ΔT₁, ΔT₂) de l'air avancé sur la surface d'évaporation (11) à au moins deux positions différentes présentent une hausse de température en sens contraire à la direction d'écoulement (15) du liquide d'humidification.

6. Procédé selon une des revendications précédentes, **caractérisé en ce que** pour une durée temporelle prédéterminée le liquide d'humidification avec un débit volumique augmenté comparé au débit volumique réglé est introduit sur la surface d'évaporation (11).

7. Procédé selon une des revendications précédentes, **caractérisé en ce que** la surface d'évaporation (11) est une surface (12) d'un humidificateur de contact (10) mouillée avec un liquide d'humidification, sur laquelle l'air à refroidir est avancé.

8. Procédé selon une des revendications 1 à 6, **caractérisé en ce que** la surface d'évaporation (11) est conçue comme un registre tubulaire (22) d'un échangeur thermique air-liquide (20), dans lequel en vue du refroidissement adiabatique un fluide caloporteur est guidé à travers le registre tubulaire (22) et l'air à humidifier est guidé autour du registre tubulaire (22), dans lequel lors du refroidissement la surface extérieure du registre tubulaire (22) est humidifiée avec un liquide d'humidification.

9. Procédé selon une des revendications 1 à 6, **caractérisé en ce que** la surface d'évaporation (11) est conçue comme une partie d'un échangeur thermique à plaques air-air (30), dans lequel l'air de refroidissement (31) avant son entrée dans l'échangeur thermique à plaques air-air (30) est humidifié avec le liquide d'humification.

10. Procédé selon une des revendications précédentes, **caractérisé en ce que** les températures (T₁, T₂) sont déterminées à l'aide de capteurs de température correspondants (19a, 19b, 19c), dans lequel les capteurs de température (19a, 19b, 19c)sont calibrés de telle sorte pour la comparaison des températures déterminées (T₁, T₂) avant l'humidification de la surface d'évaporation (11) et le refroidissement adiabatique, que les capteurs de température (19a, 19b, 19c) avant le début de l'humidification présentent une différence de température souhaitée dans la direction d'écoulement (15) du liquide d'humification.

11. Dispositif de réglage d'un débit volumique d'un liquide d'humification lors du refroidissement adiabatique, qui présente une surface d'évaporation (11), qui peut être humidifiée à l'aide d'un liquide d'humidification fourni par le dispositif d'humidification (13) et qui peut échanger de la chaleur avec l'air à refroidir et/ou à humidifier lors du refroidissement adiabatique et/ou l'humidification, dans lequel le débit volumique du liquide d'humidification s'écoulant lors du refroidissement et/ou l'humidification le long de la surface d'évaporation (11) peut être réglé, dans lequel l'air à refroidir et/ou à humidifier s'écoule essentiellement transversalement à la direction d'écoulement (15) du liquide d'humidification et sur la surface d'évaporation (11), et dans lequel pour régler le débit volumique du liquide d'humidification au moins deux capteurs de température (19a, 19b, 19c) sont prévus,
**caractérisé en ce que**
les au moins deux capteurs de température (19a, 19b, 19c) sont disposés dans la direction d'écoulement (15) du liquide d'humidification et en aval de la surface d'évaporation (11) par rapport à la direction d'écoulement (16b) de l'air à refroidir et déterminent les températures à deux positions différentes dans la direction d'écoulement (15) du liquide d'humidification parallèlement à la surface d'évaporation.

12. Dispositif selon la revendication 11, **caractérisé en ce que** la surface d'évaporation (11) est une surface (12) d'un humidificateur de contact (10) mouillable avec le liquide d'humidification et le refroidissement de l'air à refroidir a lieu directement de manière adiabatique.

13. Dispositif selon la revendication 11, **caractérisé en ce que** la surface d'évaporation (11) est conçue comme un registre tubulaire (22) d'un échangeur thermique air-liquide (20), dans lequel un fluide caloporteur s'écoule à travers le registre tubulaire (22) et l'air à refroidir s'écoule autour du registre tubulaire (22), dans lequel l'échangeur thermique air-liquide (20) présente la surface d'humidification (13), par l'intermédiaire de laquelle la surface extérieure du registre tubulaire (22) peut être mouillée avec le liquide d'humidification.

14. Dispositif selon la revendication 11, **caractérisé en ce que** la surface d'humidification (11) est conçu comme une partie d'un échangeur thermique à plaques air-air (30), dans lequel l'air à refroidir échange indirectement de manière adiabatique sa chaleur avec l'air de refroidissement humidifié avant son entrée dans l'échangeur thermique à plaques air-air (30) avec le liquide d'humidification.

15. Dispositif selon la revendication 11, **caractérisé en ce que** les au moins deux capteurs de température (19a, 19b, 19c) sont disposés à l'extérieur de l'échangeur thermique à plaques air-air (30) sur son côté de sortie (33) de l'air à refroidir.
